# EUROPEAN PATENT SPECIFICATION

(11) **EP 2 587 683 B1**
(45) Date of publication and mention of the grant of the patent: **25.06.2014**
(21) Application number: 11382334.8
(22) Date of filing: 31.10.2011
(51) Int. Cl.: H04B 1/713, H04W 52/34

(54) **Method and device for controlling frequency hopping in wireless communications**
Verfahren und Vorrichtung zur Steuerung von Frequenzsprüngen bei drahtlosen Verbindungen
Procédé et dispositif pour contrôler le saut de fréquence dans des communications sans fil

(43) Date of publication of application: 01.05.2013
(73) Proprietor: Vodafone Group PLC, Newbury Berkshire RG14 2FN (GB); Vodafone España, S.A.U., 28108 Alcobendas, Madrid (ES)
(72) Inventor: Güemes Cabrejas, Iñigo, Madrid (ES); Valerdi Rodriguez, David, Madrid (ES); Gomez Coloma, Alberto, Madrid (ES)
(74) Representative: Boult Wade Tennant

(56) References cited:
- EP-A1- 2 346 175
- WO-A1-2010/077191

## Description

### TECHNICAL FIELD OF THE INVENTION

The present invention has its application within the telecommunications sector and, especially, in the industrial area engaged in providing Radio Access Networks (RANs) with elements of cellular infrastructures such as Base Stations Controllers (BSCs) for Second Generation (2G) wireless communications systems.

More particularly, the invention described herein relates to a method and a device implemented in a radio network entity for the control of Frequency Hopping in mobile networks with Multiple Carrier Power Amplifier (MCPA) equipped base stations.

### BACKGROUND OF THE INVENTION

Frequency Hopping in the 2G base stations can be implemented in either of two ways: BaseBand Hopping (BBH) or Synthesized Frequency Hopping (SFH), each with its pros and cons.

With BBH, each transmitter operates on a fixed frequency. At transmission, all bursts, regardless which call connection they belong to, are routed to the transmitter of the proper frequency through a bus which every transmitter is connected to. The main advantage with this mode is that narrowband tuneable filter combiners can be used. A disadvantage is that it is not possible to use a larger number of frequencies than there are transmitters.

SFH means that one transmitter handles all bursts that belong to a specific call connection. The bursts are sent "straight on forward" to the corresponding transmitter, with no bus for routing the bursts, in contrast to BaseBand Hopping. The transmitter tunes to the correct frequency at transmission of each burst. Thus, the number of frequencies that can be used for hopping is not dependent on the number of transmitters, but wide-band hybrid combiners have to be used.

On the other hand, the hardware architecture of the Base Transceiver Stations (BTSs) has changed from Single Carrier per Power Amplifier (SCPA) to Multi Carrier per Power Amplifier (MCPA) technology. SCPA architecture operates through a parallel arrangement of amplifiers, each of these amplifiers is responsible for signals of one particular carrier (one carrier is tuned to one allowed frequency) and the outputs from each amplifier are combined to form one, multiple-carrier, signal. MCPA uses the opposite approach: rather than combining signals after amplification, MCPA combines signals before amplification so that only one amplifier is required. Therefore MCPA requires a more powerful amplifier with a broader range of operating frequencies than that of SCPA. MCPA systems and corresponding methods are disclosed in EP2 346 175 A1 and in WO 2010/077 191 A1.

Synthesized Frequency Hopping, currently the most widely used hopping mechanism, is limited to the instantaneous bandwidth (IBW) of each individual internal Power Amplifier (PA) within the radio unit (RU), typically 15/20 MHz, which is planned to be improved to 25 MHz in due course. Current and near future plans still do not cover the full E-GSM spectrum, i.e., 35 MHz, or DCS spectrum. Therefore, when an operator has frequencies scattered across a complete band or a bandwidth wider than the IBW, they can not make use of all their frequencies.

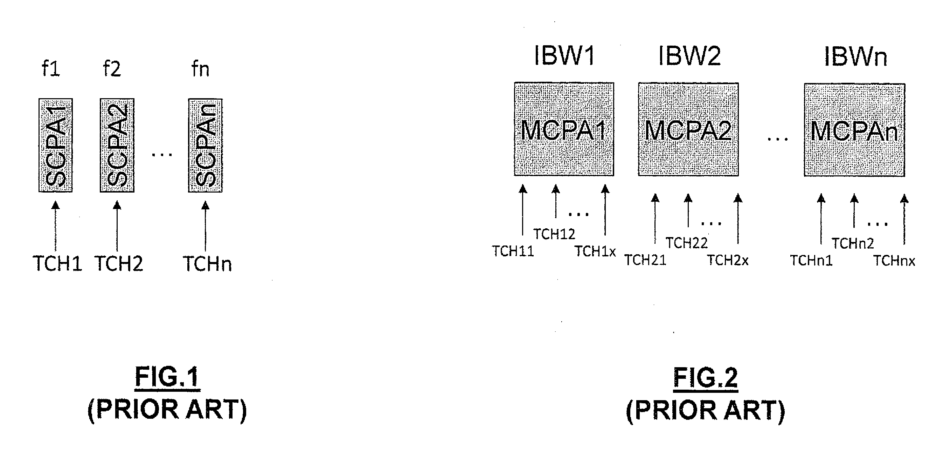

Figure 1 shows traditional frequency allocation for SCPA. A TCH or Traffic Channel, TCH₁, TCH₂, ...., TCHₙ, is allocated to one Single Carrier per Power Amplifier, SCPA₁, SCPA₂, ..., SCPAₙ, respectively of a SCPA equipped BTS, each SCPA corresponding to a frequency, f₁, f₂, ...., fₙ, and does not change throughout the call. Every burst period, each SCPA, SCPA₁ SCPA₂,... SCPAₙ, is tuned to the frequency f₁, f₂, ...., fₙ defined in the hopping sequence and there is no further limitation on the frequencies used by the SCPA.

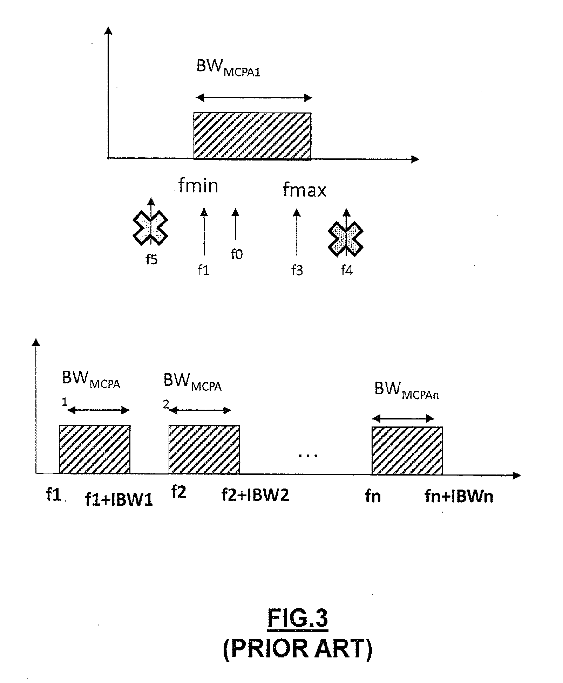

Figures 2 and 3 show how MCPA affects frequency allocation and Synthesized Hopping. A channel is allocated to a MCPA and does not change throughout the call. Every burst period, a carrier is generated in the MCPA tuned to the frequency, f₁,f₂, ...., fₙ, defined in the hopping sequence, but there are limitations on the frequencies that are used by any given MCPA: although several traffic channels, TCH₁₁, TCH₁₂, ...., TCH₁ₓ, can be generated simultaneously in one MCPA, e.g., MCPA₁, the allocated maximum and minimum frequencies (fmax, fmin), as shown in Figure 3, have to meet the condition: fmax-fmin ≤ IBW. Hence, the frequency allocation in a given MCPA equipped BTS is limited to the instantaneous bandwidth, IBW₁, IBW₂..., IBWₙ, of each individual internal Multi-Carrier Power Amplifier, MCPA₁, MCPA₂..., MCPAₙ.

When Synthesized Hopping (SFH) is used, instead of using the same frequency all the time, a TCH hops over a list of frequencies, e.g. f₀, f₁, f₃, f₄, f₅, changing the hopping frequency every burst period, i.e., 0,577ms X 8 = 4,616 ms, and following a pseudo-random order defined by the Hopping Sequence Number (HSN) as defined in the GERAN standard e.g. f₁, f₃, f₄, f₀, f₁, f₀, f₄...

A group of transceivers (TRX) on a cell sharing the same frequency hopping list is referred to as a "channel group". In order to avoid that 2 TCHs from different TRXs in a channel group use the same frequency simultaneously, each TRX is allocated a different Mobile Allocation Index Offset (MAIO), for instance:
TRX1 MAIO 0 -> f₁, f₃, f₄ ...
TRX2: MAIO 2 -> f₄, f₀, f₁...
TRX3: MAIO 1 -> f₃, f₄, f₀...

When a TCH is allocated, the Base Station Controller (BSC) managing the BTS sends the following information to the Mobile Station (MS) engaged to said BTS:
- the list of frequencies over which the TCH hops;
- the order of hopping, within said list, defined by the HSN, i.e., the order in which a group of frequencies from the list are selected for hopping;
- the order of frequencies defined by the MAIO allocated to each TRX, i.e., the MAIO defines where in the sequence of frequencies, given by the HSN (HSN = 0 defines cyclic frequency hopping), the frequency allocation starts from (if the same frequencies are available in each sector of the BTS, the MAIO can be used to ensure orthogonality between sectors is maintained).

Conventionally, the HSN and MAIO are allocated to each cell in the planning stage of a GSM network. And with all these data (list of frequencies, HSN and MAIO), the MS can generate the hopping sequence. In case of cyclic frequency hopping (HSN = 0), having assigned different MAIOs across users ensures that two low bandwidth PAs are evenly loaded.

Note that with Synthesized Hopping, different frequencies in the list can be allocated to different TRXs, even to a plurality T of TRXs, T being less than or equal to the number of frequencies from the list to be allocated in the channel group, e.g. 3 TRXs can hop over 5 frequencies.

Nonetheless, the channel groups defined over one MCPA have always to meet the following condition: the frequency difference between the highest frequency (fmax) and the lowest (fmin) can not be greater than MCPA's Instantaneous bandwidth (IBW), otherwise MCPA is not be able to generate all frequencies if more than one TRX is active at the same time. Hence, if IBW is lower than the span for the available spectrum for the Operator (e.g. IBW = 20 MHz and the Operator has 900 frequencies across 30 MHz), then the operator will not be able to use all available spectrum for 2G services.

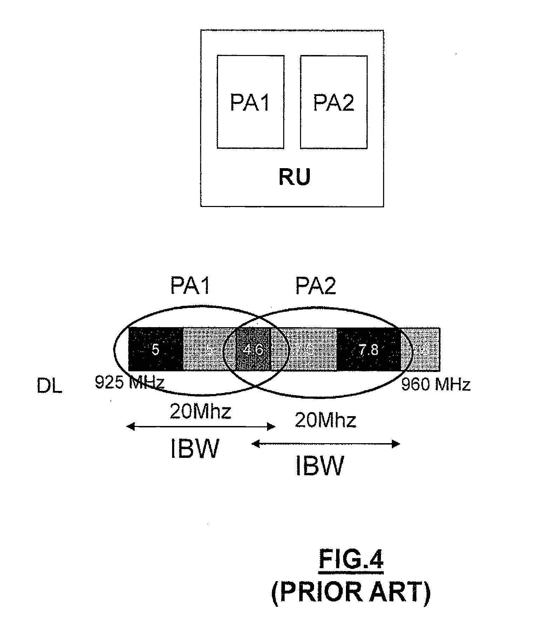

Besides, currently existing MCPA equipment are provided normally with one of three possible HW configurations: a single one Power Amplifier (PA) per Radio Unit, two PAs per Radio Unit or three PAs per Radio Unit. Figure 4 shows an example of a two-MCPA equipped Radio Unit, RU, with both Power Amplifiers, PA1, PA2, having an Instantaneous Bandwidth IBW = 20 MHz. PA1 is tuned to lower 900 MHz band, i.e., 925-945 MHz in downlink and PA2 is tuned to upper band, i.e., 935-955 MHz. Some examples of how frequencies are allocated for synthesized frequency hopping by these PAs are as follows:
- list of frequencies = {926, 927 ,928, 950, 952}, PA1 synthesizes the frequencies 926, 927 and 928 MHz, while PA2 synthesizes 950 and 952 MHz;
- list of frequencies = {926, 927, 928 ,929, 930, 950, 951}: 926,927,928, 929, 930 MHz are synthesized by PA1 and 950, 952 MHz by PA2.

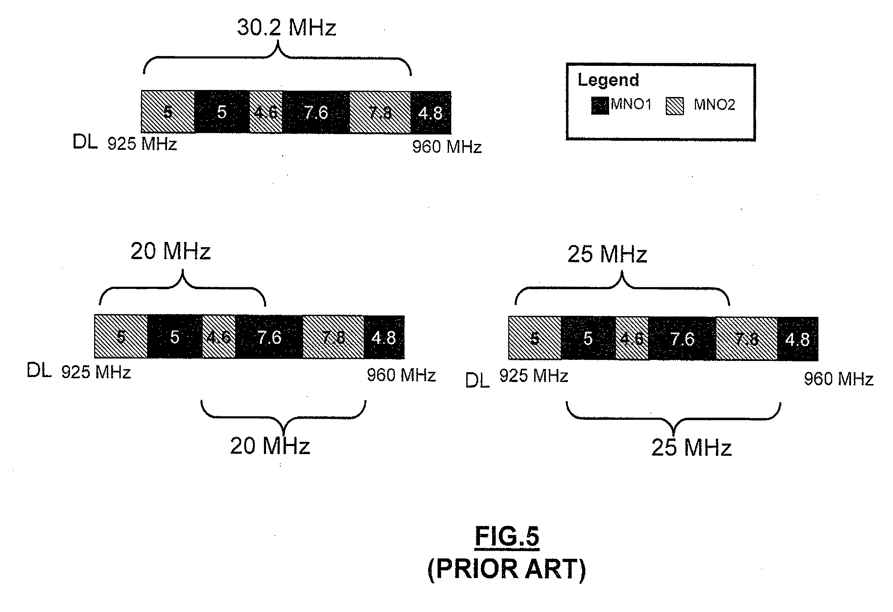

Each PA shown in Figure 4 can carry maximum 4 simultaneous channels or TRXs. However, when there are 5 simultaneous users or more, a conflict happens at PA1 for those MAIO values that require {926, 927, 928, 929, 930} combination, as maximum number (4) of simultaneous carriers is exceeded. In the examples shown in Figures 4 and 5, the 900Mhz band spectrum, from 925Mhz to 960Mhz, has been split into six partitions of the following bandwidth respectively: 5Mhz, 5Mhz, 4.6Mhz, 7.6Mhz, 7.8Mhz and 4.8Mhz.

Figure 5 shows an example of distributing 900 MHz band spectrum between two Mobile Network Operators (MNOs), MNO1 and MNO2. For instance, MNO2 can hold 17.4 MHz in three blocks across 30.2 MHz within said 900 MHz spectrum. In this scenario, if MCPA equipped base stations are used by MNO2, these base stations will need internal PAs with Instantaneous Bandwidth (IBW) > 30 MHz, as Power Amplifiers with a lower IBW, e.g. 20 or 25 MHz, can only cover two pieces of the 900 MHz band allocated to MNO2 at the same time.. A possible approach could be the use of several MCPAs to cover all pieces of available spectrum and define one channel group over the set of MCPAs, having the TCH allocated (every burst period) to the MCPA that can cover the required frequency as defined by the aforementioned hopping parameters: list of frequencies, HSN and MAIO. There is, however, a problem: the number of TCHs allocated to each MCPA at the same time is limited and, due to pseudo-random nature of hopping, it is unknown how many TCHs need to be allocated to an MCPA at the same time.

Summarizing, the problem is that the currently existing RUs of the BTSs work with a plurality of MCPAs (typically two MCPAs), instead of using multiple SCPAs, but the available alternatives of frequency hopping do not work with the current MCPA equipped BTSs as well as with the traditional SCPA; more concretely:
- BaseBand Hopping (BBH) is not desirable as it limits the number of hopping frequencies to the number of active carriers (TRXs) and is not compatible with Dynamic Power Sharing, i.e. power allocation has to be static.
- Synthesized Frequency Hopping (SFH) requires each internal PA within the RU to be tuned to a different range of frequencies, so the required BW (e.g., 35 MHz) is covered with the combination of every (normally, two) PAs. Users hop from one PA to the other only when allocated frequency is not covered in current PA. However, due to the random nature of frequency hopping, it may happen that too many users try to connect to one single PA. Therefore Dynamic Power sharing can not be fully implemented, and only certain Hopping Sequences (HSN) are allowed, thus reducing the benefit of hopping and degrading QoS. This also has an impact on OpCos (Operating Companies) frequency planning and O&M (Operation and Maintenance) tools, as they have to be adapted to cope with this limitation.

### SUMMARY OF THE INVENTION

The present invention serves to solve the aforesaid problem by controlling the frequency allocation for frequency hopping with the HSN and MAIO parameters selected taking into account two factors before call setup:
- the next combination of frequencies in the hopping sequence is allocated for a given time slot only if the number of active users per PA and their allocated power does not exceed a certain limit given by the PA configuration; otherwise, the HSN jumps to next combination of frequencies;
- the number of conflicts for the pre-selected offset (the free MAIO value), so when the number of jumps searching the hopping sequences exceeds a certain threshold, the frequency allocation is tried in another available time slot.

This solution is transparent to the users and facilitates the implementation of Synthesized Frequency Hopping (SFH) in any base station over Multiple Carrier Power Amplifier (MCPA), as it is currently used by Operators with Single Multiple Carrier Power Amplifier (SCPA). Therefore, no changes are needed to the hardware in either the BSC or the MS, QoS is not compromised and frequency plans of the Operators, O&M and optimization tools, and most important, network quality, are unaffected by the introduction of MCPA equipment.

An aspect of the invention refers to a method for controlling frequency hopping in base stations (BTSs) with one or more MCPAs, having one or more MCPAs associated to a channel group and determining a maximum number of carriers allowed in each MCPA, wherein when a traffic channel allocation request for the channel group is received, the following steps are performed:
i) assigning an available time slot to the traffic channel (normally by following an existing channel allocation scheme configured at the BSC controlling the BTSs),
ii) selecting a free MAIO value defined for frequency hopping over the hopping sequence,
iii) determining which frequencies from the hopping sequence, in accordance to the available time slot assigned to said traffic channel in step i) and the MAIO value selected in step ii), are to be allocated to the MCPA(s) associated with the channel group;
iv) estimating (e.g., by counting) a number of conflicts in each MCPA by checking whether the number of frequencies determined in step iii) exceeds the maximum number of carriers of said MCPA and, if so, the number of conflicts is increased by one;
v) repeating steps ii)-iv) for every frequency of the hopping sequence and all the free MAIO values,
vi) assigning to the traffic channel the free MAIO value corresponding to the lowest estimated number of conflicts, this MAIO value is to be sent along with the list of frequencies and HSN which define a hopping sequence used by the traffic channel to frequency hop.

Optionally, the Operator can define a maximum number of conflicts and, if the lowest counted number of conflicts is higher than the defined maximum number of conflicts, steps i)-vi) are repeated for another available time slot. In the case that the lowest counted number of conflicts is equal or lower than the defined maximum number of conflicts, the time slot assigned in step i) is allocated to the traffic channel and the MAIO value assigned in step vi) is sent to be used by the traffic channel to frequency hop. Otherwise, if the lowest counted number of conflicts exceeds the maximum number of conflicts for all the available time slots, the request for allocation of the traffic channel is rejected.

If no maximum number of conflicts is considered, the available time slot assigned in step i) is the one allocated to the traffic channel and the MAIO value assigned in step vi) is sent to be used by the traffic channel for frequency hopping.

Note that the step of determining which frequencies from the list are to be allocated to the MCPA meets its IBW requirement, that is, the determined frequencies comply with being within the frequency range limited by the instantaneous bandwidth for which the MCPA is configured.

Another aspect of the invention deals with a network entity which can be implemented in a node of the GSM radio network serving as a controller (i.e., BSC) and comprises processing means for performing the method described before.

A further aspect of the invention refers to a computer program product which comprises program code means to be loaded into processing means of a base station controller in order to execute the described method.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1. - It shows the frequency allocation when SCPA is used in the base station, as known in prior art.
Figure 2. - It shows the frequency allocation when MCPA is used in the base station, as known in prior art.
Figure 3. - It shows the known in prior art frequency limitations when MCPA is used in the base station.
Figure 4. - It shows a MCPA Radio Unit with two power amplifiers and the frequency allocation on each.
Figure 5. - It shows a scenario of frequency allocation between tow mobile network operators sharing GSM-900 spectrum.
Figure 6. - It shows a flowchart of the steps for managing frequency allocation and hopping from a base station controller according to a preferred embodiment of the invention.

### DETAILED DESCRIPTION OF THE INVENTION

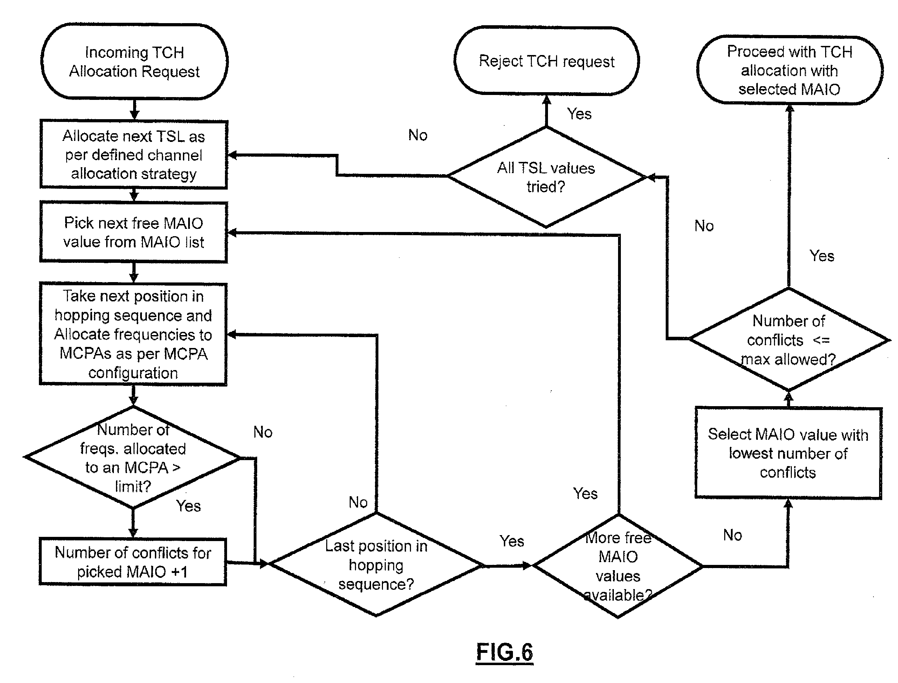

A preferred embodiment of the invention is focused on a method of controlling frequency allocation for synthesized hopping, which can be implemented in a BSC. Channel Groups are defined per MCPA and per cell managed by the BSC (as in the SCPA case). The steps of this method are shown in Figure 6:
- When a request for allocating a TCH is received (at the BSC), a time slot, TSL, is allocated according to the usual channel allocation strategy defined by the MNO. In case of the first TCH (initialization of the algorithm) to be allocated to a channel group, the method assigns this first TCH with TSL = 0 and also with MAIO = 0 (the list of the N MAIO values is normally ordered as follows: -firstly, even values- 0, 2, 4,...; -then, odd values- 1, 3 , 5...).
- For every new TCH request arriving at the BSC, the BSC takes the first MAIO value from the list which is free (unused, not allocated yet) and, taking into account the selected free MAIO value and all the already allocated MAIO values, the BSC checks a Channel Group Hopping State Table for searching which frequencies need to be allocated for the given combination. That is, the next position in the hopping sequence, given by the HSN, is selected; for example, {fₐ, f_{d},..., fₕ₋₁} in TSL = 0, {f_{b}, fₐ,..., fₕ} in TSL = 1, etc.
- The frequencies determined by the Channel Group Hopping State Table for the given combination of TSL, HSN and MAIO, as explained before, are allocated to the MCPAs controlled by the BSC in accordance to the existing MCPA configuration known to the BSC.

Note that for each channel group, the BSC has the following information:
- MCPA units connected to the channel group
- for each MCPA unit, the MCPA configuration, i.e., the IBW, which gives the frequency range that the MCPA is capable of synthesizing, and the Maximum Number of Carriers, directly related to the number of users, which the MCPA is able to support;
- the list of frequencies available for synthesized hopping,
- the HSN that defines the hopping sequence.

With this information, the BSC defines a table with all possible Channel Group Hopping States, for example:

**Channel Group Hopping States Table**

| | | | | | |
|---|---|---|---|---|---|
| **MAIO** | **TSL= 0** | **TSL= 1** | **TSL= 2** | **...** | **TSL= H** |
| 0 | fₐ | f_{b} | f_{c} | | fₕ |
| 1 | f_{d} | fₐ | f_{b} | | fₐ |
| ... | ... | ... | ... | ... | ... |
| N-1 | _{fh-1} | fₕ | fₐ | | f_{b} |

If the BSC determines that the number of frequencies allocated to a certain MCPA (for the given timeslot, TSL and channel group offset, MAIO) exceeds the limit of its configuration parameter, Maximum Number of Carriers, a conflict is registered. The BSC counts the number of conflicts in said certain MCPA for each timeslot (TSL = 0, 1, ..., H) {in GSM, H is a whole number typically less than or equal to 7}:, i.e. the BSC counts how many times the number of carriers in the MCPA (for the considered TSL and the pre-selected MAIO) exceeds the Maximum Number of Carriers supported by this MCPA.

Thus, for each TSL value, the method counts how many conflicts occur (following the Channel Group Hopping State Table) and repeats this calculation for each unused MAIO value. The MAIO value with the lowest number of conflicts is taken and said number (NC) is compared with an allowed Maximum Number of Conflicts (MNC) configured (at the BSC) by the Operator (MNO). Then,
- If NC ≤ MNC, allocate this MAIO value to the incoming TCH
- If NC > MNC, choose a new TSL value and start the MAIO selection process again with the new TSL
- If all TSLs have been tried and it was not possible to allocate a MAIO value meeting the MNC restriction, then reject the channel request.

That is, the checking of conflicts follows until the last position in the hopping sequence is reached and for all the available (free) MAIO values. One MAIO value is selected from the available MAIO values. The MAIO value that is selected is the one for which the number of conflicts is lowest. A final checking is then performed to determine whether this lowest number of conflicts exceeds a predetermined threshold, the "Maximum Number of Conflicts", and, if so, the BSC checks whether all the possible TSL values have passed the trial for allocation or not. In case that the MAIO value with the lowest number of conflicts for a determined TSL complies with the limit given by the preconfigured Maximum Number of Conflicts, the method proceeds with the allocation of the TCH to said MAIO value; otherwise, the steps of the method are repeated for the next available TSL value and if no TSL meets a MAIO value with number of conflicts equal or lower than the Maximum Number of Conflicts, the TCH allocation request is finally rejected.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for controlling frequency hopping in base stations which use at least one Multiple Carrier Power Amplifier, comprising the steps of:
- receiving a request for allocation of a traffic channel to a channel group,
- associating at least one Multiple Carrier Power Amplifier to the channel group,
- determining a maximum number of carriers allowed in each Multiple Carrier Power Amplifier,
- sending a list of frequencies and a hopping sequence number which define a hopping sequence to which the traffic channel maps,
**characterized by** further comprising:
i) assigning an available time slot to the traffic channel,
ii) selecting a free mobile allocation index offset value defined for frequency hopping over the hopping sequence,
iii) determining which frequencies from the hopping sequence, in accordance to the available time slot assigned to said traffic channel in step i) and the mobile allocation index offset value selected in step ii), are to be allocated to the, at least one, Multiple Carrier Power Amplifier associated with the channel group;
iv) estimating a number of conflicts in the Multiple Carrier Power Amplifier by checking whether the number of frequencies determined in step iii) exceeds the maximum number of carriers of said Multiple Carrier Power Amplifier and, if so, incrementing the number of conflicts for said Multiple Carrier Power Amplifier;
v) repeating steps ii)-iv) for every frequency of the hopping sequence and all the free mobile allocation index offset values, and
vi) assigning to the traffic channel the free mobile allocation index offset value corresponding to the lowest estimated number of conflicts.

2. The method according to claim 1, further comprising defining a maximum number of conflicts and, if the lowest counted number of conflicts is higher than the defined maximum number of conflicts, repeating steps i)-vi) for another available time slot.

3. The method according to claim 2, further comprising, if the lowest counted number of conflicts is equal or lower than the maximum number of conflicts, the following steps:
vii) allocating the available time slot to the traffic channel assigned in step i),
viii) sending the mobile allocation index offset value assigned in step vi) for being used by the traffic channel to frequency hop.

4. The method according to claim 2, further comprising, if the lowest counted number of conflicts exceeds the maximum number of conflicts, having repeated steps i)-vi) for all the available time slots, a step of rejecting the request for allocation of the traffic channel.

5. The method according to claim 1, further comprising the following steps:
vii) allocating the available time slot to the traffic channel assigned in step i),
viii) sending the mobile allocation index offset value assigned in step vi) for being used by the traffic channel to frequency hop.

6. The method according to any preceding claim, wherein assigning the available time slot in step i) is performed by following an existing channel allocation scheme configured at a base station controller.

7. The method according to any preceding claim, wherein determining which frequencies from the list are to be allocated to the, at least one, Multiple Carrier Power Amplifier complies with that the frequencies are within a frequency range given by an instantaneous bandwidth for which the Multiple Carrier Power Amplifier is configured.

8. A base station controller adapted to control frequency hopping in base stations which use at least one Multiple Carrier Power Amplifier, the base station controller comprising a traffic channel allocator which associates at least one Multiple Carrier Power Amplifier to a channel group requested for allocation of a traffic channel and determines a maximum number of carriers allowed in each associated Multiple Carrier Power Amplifier, **characterized in that**
the traffic channel allocator is adapted to assign an available time slot to the traffic channel, to select a free mobile allocation index offset value defined for frequency hopping over a hopping sequence to which the traffic channel maps, the hopping sequence being defined by a given list of frequencies and a hopping sequence number,
and the traffic channel allocator is adapted to assign to the traffic channel the free mobile allocation index offset value corresponding to the lowest estimated number of conflicts, wherein a number of conflicts in the Multiple Carrier Power Amplifier is estimated by the traffic channel allocator by checking whether a previously determined number of frequencies exceeds the maximum number of carriers of said Multiple Carrier Power Amplifier and, if so, incrementing the number of conflicts for said Multiple Carrier Power Amplifier,
the traffic channel allocator being adapted to determine previously the number of frequencies from the hopping sequence which are to be allocated to the associated Multiple Carrier Power Amplifier considering the available time slot assigned to the traffic channel and the selected free mobile allocation index offset value.

9. A computer program product comprising program code means which, when loaded into processing means of a base station controller, make said program code means execute the method according to any of claims 1-7.

## Patentansprüche

1. Verfahren zum Steuern von Frequenzsprüngen in Basisstationen, die wenigstens einen Mehrträgerleistungsverstärker benutzen, das die folgenden Schritte beinhaltet:
- Empfangen einer Anforderung zur Zuordnung eines Verkehrskanals zu einer Kanalgruppe,
- Assoziieren wenigstens eines Mehrträgerleistungsverstärkers mit der Kanalgruppe,
- Ermitteln einer in jedem Mehrträgerleistungsverstärker zulässigen Höchstzahl von Trägern,
- Senden einer Liste von Frequenzen und einer Sprungsequenznummer, die eine Sprungsequenz definiert, auf die der Verkehrskanal mappt,
**dadurch gekennzeichnet, dass** es ferner Folgendes beinhaltet:
i) Zuordnen eines verfügbaren Zeitschlitzes zu dem Verkehrskanal,
ii) Auswählen eines freien Mobilfunk-Zuordnungsindex-Versatzwertes, der für Frequenzsprünge definiert ist, über die Sprungsequenz,
iii) Ermitteln, welche Frequenzen aus der Sprungsequenz, gemäß dem dem genannten Verkehrskanal in Schritt i) zugeordneten verfügbaren Zeitschlitz und dem in Schritt ii) ausgewählten Mobilfunk-Zuordnungsindex-Versatzwert, dem wenigstens einen mit der Kanalgruppe assoziierten Mehrträgerleistungsverstärker zuzuordnen sind;
iv) Schätzen einer Anzahl von Konflikten in dem Mehrträgerleistungsverstärker durch Prüfen, ob die Anzahl von in Schritt iii) ermittelten Frequenzen die Höchstzahl von Trägern des genannten Mehrträgerleistungsverstärkers übersteigt, und wenn ja, Inkrementieren der Anzahl von Konflikten für den genannten Mehrträgerleistungsverstärker;
v) Wiederholen der Schritte ii)-iv) für jede Frequenz der Sprungsequenz und für alle freien Mobilfunk-Zuordnungsindex-Versatzwerte, und
vi) Zuordnen des der niedrigsten geschätzten Anzahl von Konflikten entsprechenden freien Mobilfunk-Zuordnungsindex-Versatzwertes zu dem Verkehrskanal.

2. Verfahren nach Anspruch 1, das ferner das Definieren einer Höchstzahl von Konflikten und, wenn die niedrigste gezählte Anzahl von Konflikten höher ist als die definierte Höchstzahl von Konflikten, das Wiederholen der Schritte i)-vi) für einen anderen verfügbaren Zeitschlitz beinhaltet.

3. Verfahren nach Anspruch 2, das ferner, wenn die niedrigste gezählte Anzahl von Konflikten gleich oder kleiner als die Höchstzahl von Konflikten ist, die folgenden Schritte beinhaltet:
vii) Zuordnen des verfügbaren Zeitschlitzes zu dem in Schritt i) zugeordneten Verkehrskanal,
viii) Senden des in Schritt vi) zugeordneten Mobilfunk-Zuordnungsindex-Versatzwertes zur Nutzung durch den Verkehrskanal für Frequenzsprünge.

4. Verfahren nach Anspruch 2, das ferner, wenn die niedrigste gezählte Anzahl von Konflikten die Höchstzahl von Konflikten übersteigt, nach dem Wiederholen der Schritte i)-vi) für alle verfügbaren Zeitschlitze, einen Schritt des Ablehnens der Anforderung zur Zuordnung des Verkehrskanals beinhaltet.

5. Verfahren nach Anspruch 1, das ferner die folgenden Schritte beinhaltet:
vii) Zuordnen des verfügbaren Zeitschlitzes zu dem in Schritt i) zugeordneten Verkehrskanal,
viii) Senden des in Schritt vi) zugeordneten Mobilfunk-Zuordnungsindex-Versatzwertes zur Nutzung durch den Verkehrskanal für Frequenzsprünge.

6. Verfahren nach einem vorherigen Anspruch, wobei die Zuordnung des verfügbaren Zeitschlitzes in Schritt i) gemäß einem existierenden, an einer Basisstationssteuerung konfigurierten Kanalzuordnungsschema erfolgt.

7. Verfahren nach einem vorherigen Anspruch, wobei das Ermitteln, welche Frequenzen aus der Liste dem wenigstens einen Mehrträgerleistungsverstärker zuzuordnen sind, dem entspricht, dass die Frequenzen in dem durch eine momentane Bandbreite gegebenen Frequenzbereich liegen, für die der Mehrträgerleistungsverstärker konfiguriert ist.

8. Basisstationssteuerung zum Steuern von Frequenzsprüngen in Basisstationen, die wenigstens einen Mehrträgerleistungsverstärker benutzen, wobei die Basisstationssteuerung einen Verkehrskanalzuordner umfasst, der wenigstens einen Mehrträgerleistungsverstärker mit einer Kanalgruppe assoziiert, die zur Zuordnung eines Verkehrskanals angefordert wurde, und eine Höchstzahl von Trägern ermittelt, die in jedem assoziierten Mehrträgerleistungsverstärker zulässig sind, **dadurch gekennzeichnet, dass**
der Verkehrskanalzuordner die Aufgabe hat, dem Verkehrskanal einen verfügbaren Zeitschlitz zuzuordnen, um einen freien Mobilfunk-Zuordnungsindex-Versatzwert auszuwählen, der für Frequenzsprünge über eine Sprungsequenz definiert ist, auf die der Vekehrskanal mappt, wobei die Sprungsequenz durch eine gegebene Liste von Frequenzen und eine Sprungsequenznummer definiert wird,
und der Verkehrskanalzuordner die Aufgabe hat, dem Vekehrskanal den Mobilfunk-Zuordnungsindex-Versatzwert zuzuordnen. der der niedrigsten geschätzten Anzahl von Konflikten entspricht, wobei eine Anzahl von Konflikten in dem Mehrträgerleistungsverstärker von dem Verkehrskanalzuordner geschätzt wird, durch Prüfen, ob eine zuvor bestimmte Anzahl von Frequenzen die Höchstzahl von Trägern des genannten Mehrträgerleistungsverstärkers übersteigt, und wenn ja, die Anzahl von Konflikten für den genannten Mehrträgerleistungsverstärker erhöht,
wobei der Verkehrskanalzuordner die Aufgabe hat, zuvor die Anzahl von Frequenzen aus der Sprungsequenz zu ermitteln, die dem assoziierten Mehrträgerleistungsverstärker zuzuordnen ist, unter Berücksichtigung des dem Verkehrskanal zugeordneten verfügbaren Zeitschlitzes und des ausgewählten freien Mobilfunk-Zuordnungsindex-Versatzwertes.

9. Computerprogrammprodukt, das Programmcode umfasst, der, wenn er auf ein Verarbeitungsmittel einer Basisstationssteuerung geladen wird, bewirkt, dass der genannte Programmcode das Verfahren nach einem der Ansprüche 1-7 ausführt.

## Revendications

1. Procédé destiné à contrôler les sauts de fréquence dans des stations de base qui utilisent au moins un amplificateur de puissance à ondes porteuses multiples, comprenant les étapes consistant à :
- recevoir une demande pour attribuer un canal de trafic à un groupe de canaux,
- associer au moins un amplificateur de puissance à ondes porteuses multiples au groupe de canaux,
- déterminer un nombre maximum d'ondes porteuses autorisé dans chaque amplificateur de puissance à ondes porteuses multiples,
- envoyer une liste de fréquences et un nombre de séquence de sauts qui définissent une séquence de sauts par rapport à laquelle le canal de trafic établit un mappage,
**caractérisé par le fait qu'**il comprend en outre les opérations consistant à :
i) affecter une tranche horaire disponible au canal de trafic,
ii) sélectionner une valeur de décalage d'indice d'attribution à un mobile libre définie pour les sauts de fréquence sur la séquence de sauts,
iii) déterminer quelles sont les fréquences à partir de la séquence de sauts, en conformité avec la tranche horaire disponible affectée audit canal de trafic lors de l'étape i) et avec la valeur de décalage d'indice d'attribution à un mobile sélectionnée lors de l'étape ii), qui sont destinées à être attribuées audit, au moins un, amplificateur de puissance à ondes porteuses associé au groupe de canaux ;
iv) estimer un certain nombre de conflits dans l'amplificateur de puissance à ondes porteuses multiples, en faisant une vérification pour savoir si le nombre de fréquences ayant été déterminé lors de l'étape iii) dépasse le nombre maximum d'ondes porteuses dudit amplificateur de puissance à ondes porteuses multiples et, dans l'affirmative, incrémenter le nombre de conflits pour ledit amplificateur de puissance à ondes porteuses multiples ;
v) répéter les étapes ii) à iv) pour chaque fréquence de la séquence de sauts et pour toutes les valeurs de décalage d'indice d'attribution à un mobile libre, et
vi) affecter au canal de trafic la valeur de décalage d'indice d'attribution à un mobile libre correspondant au nombre de conflits estimés le plus faible.

2. Procédé selon la revendication 1, comprenant en outre l'opération consistant à définir un nombre maximum de conflits et, si le nombre compté le plus faible de conflits est supérieur au nombre maximum de conflits ayant été défini, répéter les étapes i) à vi) pour une autre tranche horaire disponible.

3. Procédé selon la revendication 2, si le nombre compté le plus faible de conflits est égal ou inférieur au nombre maximum de conflits, comprenant en outre les étapes suivantes consistant à :
vii) attribuer la tranche horaire disponible au canal de trafic ayant été affecté lors de l'étape i),
viii) envoyer la valeur de décalage d'indice d'attribution à un mobile ayant été affectée lors de l'étape vi) pour une utilisation par le canal de trafic afin d'effectuer des sauts de fréquence.

4. Procédé selon la revendication 2, si le nombre compté le plus faible de conflits dépasse le nombre maximum de conflits, après avoir répété les étapes i) à vi) pour toutes les tranches horaires disponibles, comprenant en outre une étape consistant à rejeter la demande pour attribuer le canal de trafic.

5. Procédé selon la revendication 1, comprenant en outre les étapes suivantes consistant à :
vii) attribuer la tranche horaire disponible au canal de trafic ayant été affecté lors de l'étape i),
viii) envoyer la valeur de décalage d'indice d'attribution à un mobile ayant été affectée lors de l'étape vi) pour une utilisation par le canal de trafic afin d'effectuer des sauts de fréquence.

6. Procédé selon l'une quelconque des revendications précédentes, l'affectation de la tranche horaire disponible lors de l'étape i) étant réalisée en suivant un plan d'attribution de canaux existant lequel est configuré au niveau d'un contrôleur de station de base.

7. Procédé selon l'une quelconque des revendications précédentes, l'opération consistant à déterminer quelles fréquences de la liste qui sont destinées à être attribuées audit, au moins un, amplificateur de puissance à ondes porteuses multiples, étant conforme au fait que les fréquences se situent dans les limites d'une gamme de fréquences donnée par une largeur de bande instantanée pour laquelle l'amplificateur de puissance à ondes porteuses multiples est configuré.

8. Contrôleur de station de base conçu pour contrôler les sauts de fréquence dans des stations de base qui utilisent au moins un amplificateur de puissance à ondes porteuses multiples, le contrôleur de station de base comprenant un dispositif d'attribution de canal de trafic lequel associe au moins un amplificateur de puissance à ondes porteuses multiples à un groupe de canaux ayant été demandé en attribution par un canal de trafic, et détermine un nombre maximum d'ondes porteuses autorisé dans chaque amplificateur de puissance associé à ondes porteuses multiples, **caractérisé en ce que**
le dispositif d'attribution de canal de trafic est conçu pour affecter une tranche horaire disponible au canal de trafic, pour sélectionner une valeur de décalage d'indice d'attribution à un mobile libre définie pour les sauts de fréquence sur une séquence de sauts par rapport à laquelle le canal de trafic établit un mappage, la séquence de sauts étant définie par une liste donnée de fréquences et un nombre de séquence de sauts,
et le dispositif d'attribution de canal de trafic est conçu pour affecter au canal de trafic la valeur de décalage d'indice d'attribution à un mobile libre correspondant au nombre de conflits estimés le plus faible, cas dans lequel un certain nombre de conflits dans l'amplificateur de puissance à ondes porteuses multiples est estimé par le dispositif d'attribution de canal de trafic en faisant une vérification pour savoir si un nombre de fréquences ayant été déterminé préalablement dépasse le nombre maximum d'ondes porteuses dudit amplificateur de puissance à ondes porteuses multiples et, dans l'affirmative, incrémenter le nombre de conflits pour ledit amplificateur de puissance à ondes porteuses multiples,
le dispositif d'attribution de canal de trafic étant conçu pour déterminer préalablement le nombre de fréquences à partir de la séquence de sauts qui sont destinées à être attribuées à l'amplificateur de puissance associé à ondes porteuses multiples, en tenant compte de la tranche horaire disponible affectée au canal de trafic ainsi que de la valeur de décalage d'indice d'attribution à un mobile libre ayant été sélectionnée.

9. Produit de programme informatique comprenant des moyens de code-programme qui, lorsqu'il est chargé dans des moyens de traitement d'un contrôleur de station de base, oblige lesdits moyens de code-programme à exécuter le procédé selon l'une quelconque des revendications 1 à 7.
